(19) **Europäisches Patentamt**
**European Patent Office**
**Office européen des brevets**

(11) **EP 1 664 836 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(51) Int Cl.:
***G01S 13/02*** (2006.01)

(21) Anmeldenummer: **04765187.2**

(86) Internationale Anmeldenummer:
**PCT/EP2004/010273**

(22) Anmeldetag: **14.09.2004**

(87) Internationale Veröffentlichungsnummer:
**WO 2005/033734 (14.04.2005 Gazette 2005/15)**

(54) **TRANSPONDERUNTERSTÜTZTES POSITIONIERSYSTEM**

TRANSPONDER-ASSISTED POSITIONING SYSTEM

SYSTEME DE POSITIONNEMENT ASSISTE PAR TRANSPONDEUR

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.09.2003 DE 10342767**

(43) Veröffentlichungstag der Anmeldung:
**07.06.2006 Patentblatt 2006/23**

(73) Patentinhaber: **Indyon GmbH**
**80686 München (DE)**

(72) Erfinder:
• **PLETTNER, Andreas**
**82335 Berg (DE)**
• **KLOSE-PARIL, Berthold**
**80939 München (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
**WO-A-01/06401     US-A- 5 260 694**

• **EURO I.D.: "ANWENDUNGSBEISPIEL BLOCKSTORE" HOMEPAGE, EURO I.D., März 2002 (2002-03), XP002311534 INTERNET - & EURO I.D.: "ANWENDUNGSBEISPIEL BLOCKSTORE" EURO .I.D, August 2000 (2000-08), XP002311535**
• **RFID JOURNAL: "RFID Speeds P&G Plant Throughput" RFID JOURNAL, 3. Februar 2003 (2003-02-03), XP002311536**
• **"Bericht Chargenverfolgung und Leergutsortierung" BRAUEREI FORUM, Nr. 5, 2004, XP002311537**

EP 1 664 836 B1

**Beschreibung**

Die vorliegende Erfindung betrifft ein transponderunterstütztes Positioniersystem und betrifft insbesondere ein System zum gabelstaplergestützten Ein- und Auslagern von Waren in einem Lager mit automatischer Positionsbestimmung der eingelagerten Waren sowie ein entsprechendes Verfahren.

Um in einem Warenlager eine Lageroptimierung sowie eine automatische Warenverfolgung zu gewährleisten, ist es notwendig, Be- und Entladevorgänge von Transportfahrzeugen in einem Lagerbereich positionsgenau zu kontrollieren. Somit kann jederzeit eine Warenbestandssicherheit gewährleistet werden.

Entsprechende Warenverfolgungssysteme können in Freilagern unter Verwendung eines satellitengestützten Positionierungssystems (GPS) mit einem differentiellen GPS-System realisiert werden. Da GPS jedoch nur in Außenbereichen einsetzbar ist, können derartige Warenverfolgungssysteme nicht in Lagerhallen eingesetzt werden. Hierzu werden sogenannte Indoor-Navigationssysteme benötigt, die eine positionsgenaue Verfolgung von Transportfahrzeugen bei Warenbe- bzw. -entladevorgängen auch in Lagerhallen ermöglichen. Eine Ortung von Transportfahrzeugen, wie beispielsweise Gabelstaplern, innerhalb geschlossener bzw. überdachter Lagerhallen ermöglicht eine automatisierte Verwaltung von transportierten bzw. zu transportierenden Gütern.

DE-C1-199 38 345 beschreibt ein Verfahren und eine Vorrichtung zur Erfassung der Position von einem Fahrzeug in einem vorgegebenen Bereich, insbesondere eine Lagereinrichtung sowie ein Lagerverwaltungsverfahren und -system. Die Erfassung der Position des Fahrzeugs beruht im Wesentlichen auf zwei Messungen, einer inkrementalen Messung des Raddrehwinkels, die einen Rückschluss auf den gefahrenen Weg und somit auf eine relative Positionsänderung ermöglicht, sowie ein optische Messung der absoluten Position über Referenzpunkte an der Lagerdecke, die optisch abgegriffen werden. Als Referenzpunkte werden spezielle Streifenanordnungen an die Lagerdecke angebracht, die beim passieren mit dem Laserstrahl eine Berechnung der Position und des Winkels erlauben. Somit können Fehler bei der Positionsbestimmung durch die inkrementale Messung des Raddrehwinkels kompensiert und korrigiert werden. Diese Technologie weist jedoch Nachteile in Bezug auf die Präzision der Positionsänderung des Transportfahrzeugs auf, da insbesondere Schwierigkeiten bestehen, Schlupf und Drift, die bei einer gefahrenen Strecke auftreten können, zu kompensieren. Des Weiteren ist der mechanische Abgriff der Strecke vom Rad anfällig gegenüber Staub, Schmierfilme, Ruß etc. Weiterhin besteht ein Nachteil dieser Technologie in den hierfür aufzuwendenden Kosten.

Die Schwierigkeiten bei der Bestimmung der Präzision der Positionsänderung können dazu führen, dass die oben beschriebene Vorrichtung in vielen Fällen nicht anwendbar ist, da die in einem Lagerverwaltungssystem geforderte Genauigkeit damit nicht erzielt werden kann oder die Kosten zu hoch sind. In der Regel sind in gebräuchlichen Lagerverwaltungssystemen Genauigkeiten von kleiner als 40 cm notwendig. Diese Anforderung ergibt sich daraus, zwei benachbarte Lagerplätze in einem Lagerbereich, in dem Gegenstände bzw. Waren zum Beispiel auf Paletten gelagert sind, voneinander unterscheiden zu können, wobei die Genauigkeit der Be- oder Entladeposition um mindestens ein halbe Palettenbreite bekannt sein muss.

Ein weiteres Problem in Bezug auf die geforderte Genauigkeit besteht darin, dass verschiedene Lagerbereiche meist unterschiedliche Strukturen aufweisen, da Lagerbereiche häufig durch Erweiterungen vergrößert werden und in der Regel aus mehreren Lagerhallen bestehen, die unterschiedliche Grundrisse und Höhen haben können. In derartigen Strukturen können Lagergassen Längen von mehr als 50 Meter aufweisen. Weiterhin können derartige Lagergassen schmal ausgeführt sein und auch dazu verwendet werden, dass Waren oder Gegenstände unmittelbar in derartigen Gassen abgelegt werden, wenn ansonsten keine Lagerplätze frei sind. Insbesondere in langen und schmalen Lagergassen müssen starke Kurvenfahrten von Transportfahrzeugen vermieden werden. Deshalb ist die geforderte Genauigkeit zur Positionsbestimmung in einem Lagerverwaltungssystem ein wesentlicher Faktor, dem Rechnung getragen werden muss.

In der WO 01/06401 A werden den einzulagernden Waren Transponder zugeordnet, so dass es möglich ist, eingelagerte Waren bei genügender Annäherung mittels einer Antenne auszulesen. Eine Ware kann jedoch nur erkannt werden, wenn diese gezielt gelesen wird, d.h. vor dem Auslesen muss sich die Leseeinheit zu der Ware hinbewegen.

Derartige Systeme benötigen somit für jede einzelne Ware einen eigenen Transponder, typischerweise führt dies in einem großen Lager zu zehntausenden von Transpondern.

Das Dokument Euro I.D.."Anwendungsbeispiel Blockstore" Hompage, Euro I.D., März 2002 (2002-03), XP00231 1534 Internet beschreibt ein fahrzeuggestütztes System zum Ein- und Auslagern von Waren, bei dem vorgesehen ist, dass Transponder über den Hallenboden verteilt angebracht sind (vgl. Seite 1, rechte Spalte, erster Absatz). Aus der rechten Fig.auf Seite 2 des Dokuments ergibt sich, dass es sowohl Bodentransponder als auch sog. Umlauf-Produkttransponder aufweist (vgl. auch Seite 1, rechte Spalte, erster Absatz).

Das Dokument RFID Journal: "RFID Speeds P & G Plant Throughput" RFID Journal, 3. Februar 2003 (2003-02-03), XP002311536 beschreibt ein System zum Auslagern von Waren. Das System verwendet ortsfeste in den Boden eingelassene Transponder, ein Fahrzeug und Barcodes an der Ware (Paletten). Die Positionsbestimmung und Identifikation der Ware wird durch das Lesen von Barcodes auf den Transportbändern ermöglicht. Die Ware wird von dort auf einen Gabelstapler geladen, der die Position mit Hilfe von ortsfesten Transpondern (in den Boden eingelassen) bestimmt. Über ein Computersystem wird das Auslagern der Ware kontrolliert. RFID Journal: "RFID Speeds P & G Plant Throughput" RFID Journal, 3. Februar 2003 (2003-02-03), XP002311536 verfolgt somit einen grundlegend anderen Aspekt und beschreibt insbesondere wie das Auslagern von Waren effektiv erfolgen kann.

Aus US 5,260,694 ist ein Warenverfolgungssystem bekannt, bei dem Bodentransponder den Ort einer Warenaufnahmezone und von Regalzonen definieren. Die Bodentransponder werden von einem auf einem Gabelstapler angebrachten Lesegerät detektiert, die Positionsdaten werden danach an einen externen Computer übermittelt. Das System gestattet somit dem Fahrer des Gabelstaplers mitzuteilen, ob die Ware an der richtigen Stelle abgelegt wurde. Der Gabelstapler verfügt darüber hinaus über einen Lastsensor zum Erkennen, wenn eine Ware aufgenommen wurde.

Es ist die Aufgabe der vorliegenden Erfindung eine Möglichkeit anzugeben, die eine einfache und präzise Positionsbestimmung von Waren im Zeitpunkt der Einlagerung in einem Lager ermöglicht.

Diese Aufgabe wird durch die Gegenstände der Ansprüche 1 und 11 gelöst.

Bevorzugte Ausgestaltungen sind Gegenstand der Unteransprüche.

Die vorliegende Erfindung baut insbesondere auf der Erkenntnis auf, dass Systeme, bei denen die Position einer einzulagernden Ware dadurch bestimmt wird, dass das transportierende Fahrzeug über Radsensoren den zurückgelegten Weg erfasst, zu ungenau bzw. zu fehleranfällig sind. Darüber hinaus baut die Erfindung auf der Erkenntnis auf, dass bisher bekannte Systeme, bei denen jede Ware einen Transponder trägt, zumindest zum jetzigen Zeitpunkt zu teuer sind und darüber hinaus sich diese Transponder nur lesen lassen, wenn ein Lesegerät in die Nähe der eingelagerten Waren gebracht wird. Das bedeutet, dass derartige Systeme nicht geeignet sind, im Rahmen einer effizienten Warenverfolgung verwendet zu werden.

Gemäß der vorliegenden Erfindung werden zumindest über den überwiegend befahrenen Teil eines Lagers, am Boden in vorgegebenen Abständen verteilt, Transponder befestigt, die beim Überfahren mit dem Transportfahrzeug einen Aufschluss über die aktuelle Position des Transportfahrzeugs und damit der beförderten Ware zulassen. Diese Verfolgung dauert an bis zur eigentlichen Einlagerung der Ware, so dass letztendlich die endgültige Position, an der die Ware abgelagert wurde, erfasst werden kann. Werden diese Daten kombiniert mit Daten, die die Ware beschreiben, so bietet dies eine Grundlage für ein effizientes Warenverfolgungssystem.

Bevorzugte Ausgestaltungen der Erfindung werden im folgenden unter Bezugnahme auf die beiliegenden Zeichnungen näher erläutert. Dabei zeigen die Zeichnungen im einzelnen:

Figur 1        zeigt eine schematische Ansicht eines Lagers zur Verdeutlichung der Funktionsweise einer bevorzugten Ausführungsform der vorliegenden Erfindung;

Figur 2        zeigt eine schematische Darstellung eines für das bevorzugte Ausführungsbeispiel benötigten Transportfahrzeugs;

Figur 3        zeigt eine schematische Darstellung eines Transponders, der von einem Antennenfeld überstrichen wird und

Figur 4a - 4h        zeigen schematische Darstellungen unterschiedlicher Variationen, wie das Antennenfeld in Bezug auf die Verteilung der Transponder gewählt werden kann.

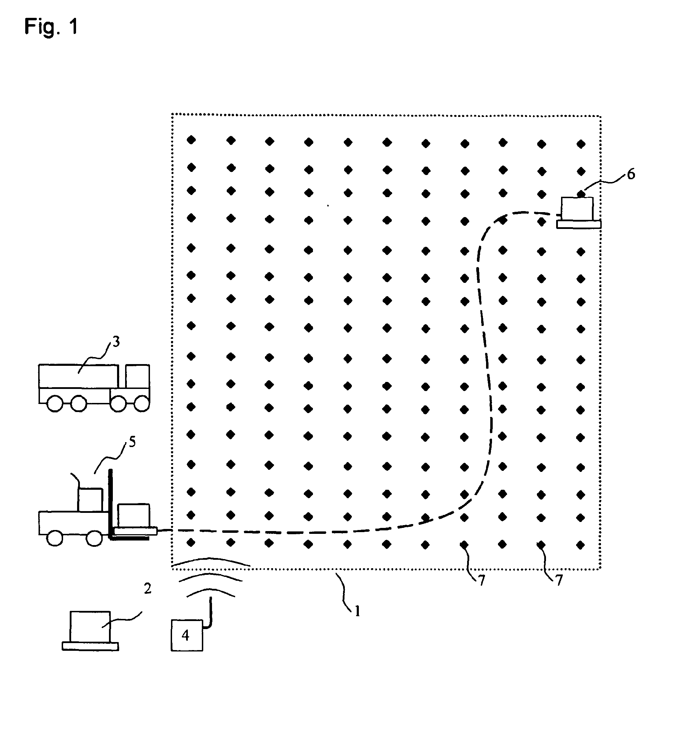

Figur 1 zeigt eine schematische Ansicht eines Lagers 1, in das Waren ein- und Ausgelagert werden. Eine Ware 2, die beispielsweise mit einem LKW 3 angeliefert wird, trägt vorzugsweise einen Barcode, der einer Computereinrichtung 4 des Lagers über ein geeignetes Lesegerät ermöglicht, die Identität und/oder die Art der Ware automatisch zu erkennen und zu speichern. Zum Einlagern wird die Ware 2 von einem Fahrzeug, vorzugsweise einem Gabelstapler 5 aufgenommen und zu einer geeigneten Position 6 innerhalb des Lagers befördert. Ein geeigneter Weg vom Eingang des Lagers bis zur Position 6 ist gestrichelt markiert. Auf dem Weg des Gabelstaplers 5 zur Einlagerposition 6 überstreicht ein auf dem Fahrzeug 5 montiertes Lesegerät mehrere Transponder 7 die auf dem Boden des Lagers verteilt angeordnet sind. Die Transponder 7 sind vorzugsweise in kleinen Löchern im Boden des Lagers versenkt und können somit problemlos überfahren werden. Die auf dem Fahrzeug 5 befindliche Leseeinrichtung weist mindestens eine Antenne auf, die ein entsprechendes Antennenfeld definiert. Sobald das Antennenfeld der Leseeinrichtung über einen der Transponder 7 bewegt wird, werden Informationen aus dem Transponder ausgelesen. Diese Informationen definieren zumindest in indirekter Weise die Position der entsprechenden Transportereinrichtung innerhalb des Lagers 1, so dass jedesmal, wenn derartige Informationen ausgelesen werden, die aktuelle Position des Fahrzeugs 5 bestimmt werden kann. Somit werden auf dem Weg vom Eingang des Lagers bis zur Einlagerposition 6 mehrere derartige Positionsbestimmungen durchgeführt, jedesmal dann, wenn ein Transponder überfahren wird. Letztendlich führt dies dazu, dass im Zeitpunkt des Einlagerns der Ware 2 an der Position 6 automatisch die genaue Einlagerposition bekannt ist. Die verschiedenen zwischenzeitlichen Positionsbestimmungen können in einer nicht dargestellten Computereinrichtung, die sich auf dem Fahrzeug 5 befindet, zwischengespeichert werden oder können über Funk an eine ortsfeste Computereinrichtung 4 zur weiteren Verarbeitung übertragen werden.

Zur bloßen Bestimmung der Lagerposition ist es prinzipiell nur notwendig die Lagerpositionen zu kennzeichnen und nicht die Fahrwege. Die Dokumentation der Fahrwege bzw. die Kenntnis der aktuellen Position können auch zur Navigationsunterstützung und für statistische Zwecke (z.B. durchschnittliche Dauer als Funktion des zurückgelegten Weges) einer Einlagerung) herangezogen werden.

Nicht jeder der Transponder 7 muss ein hochwertiger Transponder sein, der in der Lage ist, Informationen über die Position dieser Transponder abzugeben. Stattdessen können zwischendurch auch Transponder verwendet werden, die nur als Markierungen dienen, das heißt deren Überfahren lediglich erkannt wird. Diese Markierungen dienen zur Orientierung zwischen zwei eigentlichen Positionsbestimmungen und werden gewissermaßen beim Überfahren gezählt. Auf diese Weise ist es möglich, die Abstände zwischen den Transpondem klein zu halten und trotzdem die Gesamtkosten im Rahmen zu halten, da die Transponder, die lediglich als Markierungen dienen, wesentlich kostengünstiger sind.

Selbstverständlich muss im Zeitpunkt der Ablage einer Ware 2 an der Position 6 berücksichtigt werden, dass die Einlagerposition einen Offset gegenüber der Fahrzeugposition hat, da das Fahrzeug die Ware in ein entsprechendes Regal legt. Dieser Abstand ist entweder stets gleichbleibend und kann daher addiert werden, wird jedoch nach der Erfindung über einen speziellen Abstandssensor gemessen. Dies ist insbesondere erforderlich, wenn das Fahrzeug als Gabelstapler ausgeführt ist und in der Lage ist, Waren bzw. Paletten in unterschiedliche Tiefen des Regals einzulagern.

Vorzugsweise ist an dem Fahrzeug 5 außerdem eine Einrichtung vorhanden, die die Einlagerhöhe bestimmen kann, so dass letztendlich x, y und z Koordinaten für die Einlagerungsposition erfasst werden können. All diese Daten werden in einer Computereinrichtung auf dem Fahrzeug gespeichert oder kontinuierlich über Funk an die Computereinrichtung 4 übertragen.

Die Endposition einer eingelagerten Ware wird dadurch erkannt, dass der Fahrer des Fahrzeugs eine bestimmte Taste drückt, mit der die Einlagerung bestätigt wird und somit das Ende der Beförderung angezeigt wird. Selbstverständlich kann dies auch automatisiert dadurch erfolgen, dass ein Ablagesensor an dem Fahrzeug vorhanden ist, der das Ablegen der Ware automatisch detektiert. Selbstverständlich sind auch andere Lösungen möglich, beispielsweise, dass derartige Sensoren sich in den Regalen befinden und somit der Zeitpunkt der Einlagerung über einen derartigen Sensor erfasst wird.

Wenn die Transponder 7 nicht alle Positionsdaten speichern, sondern teilweise nur als Markierungen, die gezählt werden, dienen, so kann eine derartige Ausführungsform mit Sensoren an dem Fahrzeug 5 kombiniert werden, die den zurückgelegten Weg des Fahrzeugs über Radumläufe erfassen. Damit kann zwischen zwei tatsächlichen Positionsbestimmungen über die Markierungen und die Radsensoren die dazwischenliegende Position sehr genau abgeschätzt werden.

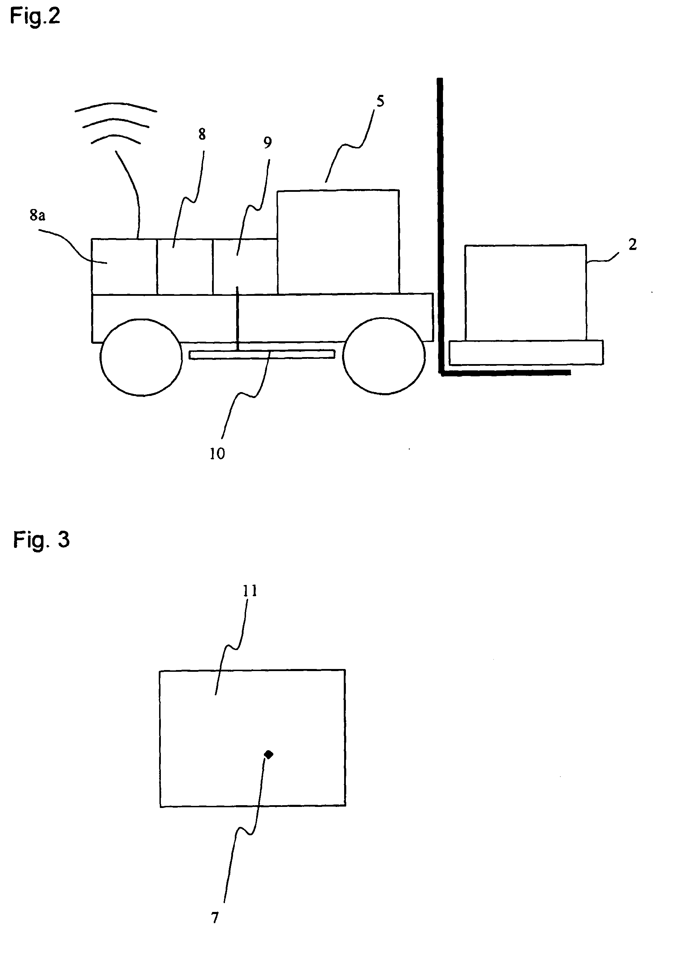

Figur 2 zeigt das Fahrzeug 5, bei dem es sich vorzugsweise um einen Gabelstapler handelt. Vorzugsweise weist dieser Gabelstapler eine Computereinrichtung 8 auf, die mit einer Leseeinrichtung 9 gekoppelt ist. Die Leseeinrichtung weist zumindest eine Antenne 10 auf, die ein Antennenfeld definiert, das auf der Unterseite des Gabelstaplers angeordnet ist und die überfahrenen Transponder detektiert und ausliest. Die ausgelesene Information wird in der Computereinrichtung 8 zwischengespeichert und in regelmäßigen Abständen oder kontinuierlich mittels eines Funkmodems 8a an eine ortsfeste Computer- oder Servereinrichtung übertragen.

Figur 3 illustriert ein durch die Antenne 10 der Figur 2 definiertes Antennenfeld 11, welches gerade einen Transponder 7 überstreicht. Solange sich das Antennenfeld 13 über dem Transponder befindet, kann die in den Transpondem gespeicherte Information, vorzugsweise Positionsinformation, ausgelesen werden.

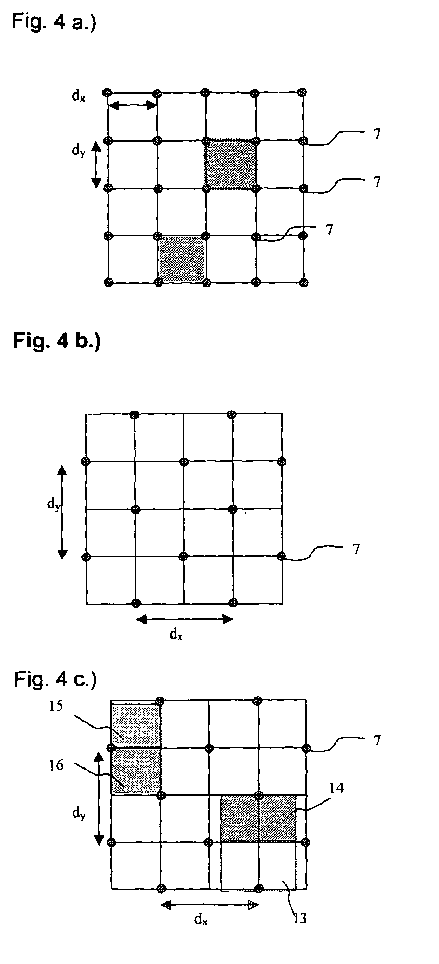

Figuren 4a - 4 h zeigen unterschiedliche Ausführungsformen für die Antennenfelder.

Insbesondere ist es möglich, mittels mehrerer Antennen mehrere Antennenfelder zu definieren, die sich auch überlappen können. Mehrere Antennenfelder haben den Vorteil, dass über die zeitliche Abfolge des Überstreichens unterschiedlicher oder gleicher Transponder eine Richtungsbestimmung zusätzlich zur aktuellen Position möglich wird. Ähnliches gilt für überlappende Bereiche der Antennenfelder. Das Erkennen eines Transponders in einem überlappenden Bereich ermöglicht ebenfalls die Verfeinerung der aktuellen Positionsbestimmung.

Wird nur mit einem einzigen Antennenfeld gearbeitet, so wird die Auflösung der Positionsbestimmung im wesentlichen durch den Abstand der Transponder zueinander definiert.

Der Vorteil der Verwendung mehrerer Antennenfelder besteht daher darin, dass eine Verfeinerung der Positionsbestimmung trotz gleichbleibender Transpondersabstände ermöglicht wird.

Figur 4a illustriert den Fall, dass ein Antennenfeld 12 durch eine einzige Antenne gebildet wird. Dabei sind zwei Varianten möglich, nämlich dass das Antennenfeld kleiner ist, als die Fläche zwischen benachbarten Transpondem, das heißt, dass durch das Antennenfeld gleichzeitig immer nur ein Transponder überstrichen werden kann.

Im anderen Fall ist das Antennenfeld größer als die entsprechende Fläche, so dass gleichzeitig mehrere Transponder gelesen werden können.

Figur 4b zeigt ein anderes Muster zur Anordnung der Transponder 7. Dieses Muster entspricht einem 4-Eck bzw. Rechteck mit jeweils einem Transponder an den Ecken und im Mittelpunkt.

Figur 4c zeigt einen Fall, bei dem das Antennenfeld durch jeweils zwei Teilfelder 13, 14 bzw. 15 und 16 gebildet wird.

Bei dem gezeigten linken Fall (Teilfelder 15, 16), für den gilt:

$$a_x = \frac{1}{2} d_x \wedge a_y <= \frac{1}{2} d_y$$

kann es zu der Situation kommen, dass kein Transponder gelesen wird. Diese Information kann jedoch auch interpretiert werden, da aus den vorangegangenen Messungen die Richtung erkennbar ist und bis kurz vor Erreichen dieser Position die anderen Transponder gelesen werden können. Somit ist die Position eindeutig bestimmbar.

Es ergibt sich eine Toleranz t jeweils in x- und y-Richtung:

$$t_x = \frac{1}{2} d_x$$

$$t_y = \frac{1}{2} d_y$$

Für den Rechten Fall, für den gilt:

$$a_x = \frac{3}{4} d_x \wedge a_y \geq \frac{1}{2} d_y$$

kann es zu der Situation kommen, in der ein Lesefeld gleichzeitig zwei Transponder überdeckt und dadurch keine Information lesen kann (Falscher Read). Diese Situation kann jedoch interpretiert werden, da aus den vorangegangenen Messungen die Richtung erkennbar ist, um bis kurz vor Erreichen dieser Position die anderen Transponder gelesen werden können. Somit ist die Position eindeutig bestimmbar. Selbstverständlich können auch Transpondersysteme Verwendung finden, bei denen eine Antenne gleichzeitig zwei oder mehr Transponder detektieren kann.

Es ergibt sich eine Toleranz t jeweils in x- und in y-Richtung:

$$t_x = \frac{1}{4} d_x$$

$$t_y = \frac{1}{2} d_y$$

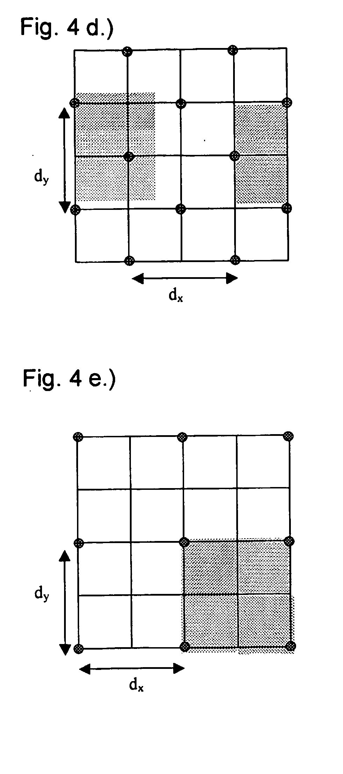

Figur 4d zeigt einen Fall, bei dem sich die Lesefelder jeweils mit ihrer halben Länge überlappen. Vorzugsweise werden die einzelnen Felder in y-Richtung um jeweils ein Drittel verlängert, so dass bei jedem Antennenfeld zwei Drittel nicht überlagert sind und ein Drittel überlagert ist, wodurch sich ein Verhältnis zwischen nicht überlagerter Fläche und überlagerter Fläche von 2: 1 ergibt.

Gemäß dem linken Fall kann eine Verlängerung der Antennenfelder um ein Drittel auch in x-Richtung erfolgen.

Bei dem dargestellten Fall würde sich für jede Antenne ein "Falscher Read" ergeben, der entsprechend interpretiert werden kann und somit eine eindeutige Positionsermittlung zulässt. Wie angedeutet, können auch Transpondersysteme verwendet werden, bei denen zwei oder mehr Transponder gleichzeitig gelesen werden können. In diesem Fall werden die Daten der vorhergehenden Messung nur zur Bestimmung der Ausrichtung benötigt.

$$a_x = \frac{3}{4} d_x \wedge a_y \frac{2}{3} d_y , \ \text{Überlappung} = \frac{1}{3} d_y,$$

wobei $a_x$, $a_y$ die Ausdehnung des Antennenfeldes angibt.

Es ergibt sich somit eine Toleranz t jeweils in x- und y-Richtung:

$$t_x = \frac{1}{4} d_x$$

$$t_y = \frac{1}{3} d_y$$

Durch Verkürzen des Feldes in y-Richtung auf Werte unter den Transponderabstand wird aus dem "Falschen Read" ein "Kein Read", und dies kann entsprechend interpretiert werden.

$$a_x = \frac{1}{2} d_x \wedge a_y = \frac{2}{3} d_y , \ \text{Überlappung} = \frac{1}{3} d_y$$

Es ergibt sich somit eine Toleranz t in jeweils x- und y-Richtung zu:

$$t_x = \frac{1}{2} d_x$$

$$t_y = \frac{1}{3} d_y$$

Figur 4e zeigt 4 Antennen, die als Viereck bzw. Rechteck angeordnet sind.

Bei diesem Fall ist vorgesehen, dass jede Antenne maximal einen Transponder lesen kann. Die Felder der Antennen überlappen sich an den berührenden Kanten nur soweit, dass ein Transponder, der sich direkt unter einer Mittellinie befindet, von beiden angrenzenden Antennenfeldem erfasst wird. Jedes Antennenfeld ist gleich einem Feld mit halbem Transponderabstand und alle an den Kanten befindlichen Transponder befinden sich im Lesefeld.

$$a_x = \frac{1}{2} d_x \wedge a_y = \frac{1}{2} d_y \, , \ \ \text{Überlappung} = 0$$

Es ergibt sich eine Toleranz t jeweils in x- und y-Richtung:

$$t_x = \frac{1}{2} d_x$$

$$t_y = \frac{1}{2} d_y$$

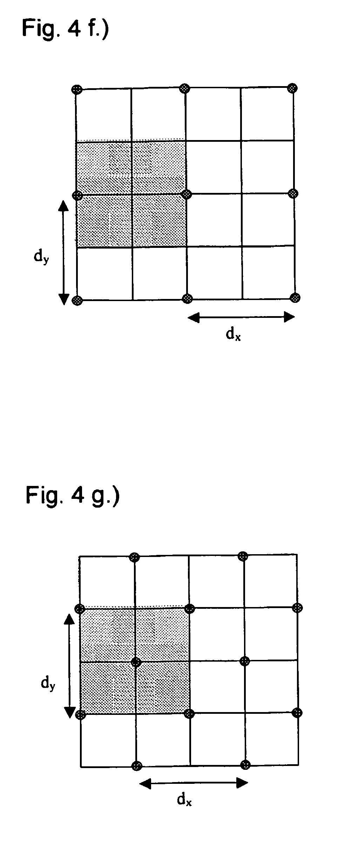

Figur 4f zeigt wiederum 4 Antennen als Viereck angeordnet. Eine Antenne kann maximal einen Transponder lesen. Die Felder der Antennen überlappen sich an den berührenden Kanten um 50 % (indem jedes Antennenfeld gegenüber der Variante nach Figur 4e um 4/3 vergrößert wird). Jedes Antennenfeld ist gleich mit einem Feld mit halbem Transponderabstand und alle an den Kanten befindlichen Transponder befinden sich im Lesefeld.

$$a_x = \frac{2}{3} d_x \wedge a_y = \frac{2}{3} d_y \, , \ \ \text{Überlappung} = \ 50 \, \%$$

Es ergibt sich eine Toleranz t jeweils in x- und y-Richtung zu:

$$t_x = \frac{1}{3} d_x$$

$$t_y = \frac{1}{3} d_y$$

Bei Figur 4g sind die Antennen wie in Figur 4f angeordnet, jedoch befindet sich im Unterschied zu diesem Fall ein weiterer Transponder im Mittelpunkt eines jeden Vierecks. Die Antennenfelder überlappen sich wie bei der Figur 4f. Mit dieser Anordnung lässt sich die Genauigkeit erhöhen.

$$a_x = \frac{2}{3} d_x \wedge a_y = \frac{2}{3} d_y \, , \ \ \text{Überlappung} = \ 50 \, \%$$

Es ergeben sich Toleranzen t jeweils in x- und y-Richtung zu

$$t_x = \frac{1}{6}d_x$$

$$t_y = \frac{1}{6}d_y$$

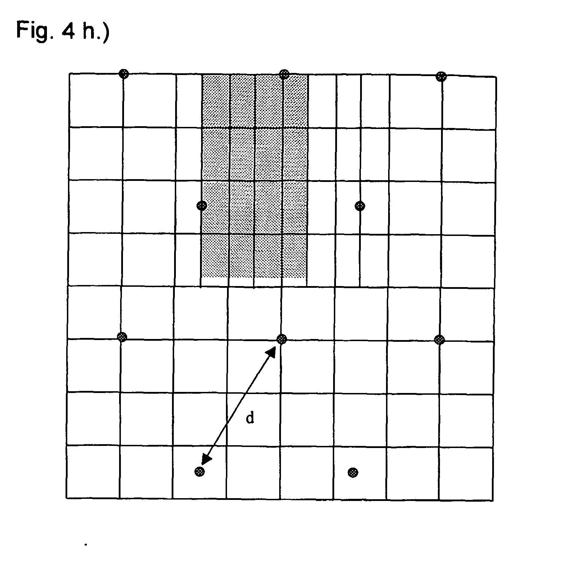

Bei der Anordnung gemäß Figur 4h sind die Abstände sämtlicher benachbarter Transponder äquidistant gewählt. Daraus ergibt sich eine Hexagonalanordnung. Bei der gezeigten Variante überlappen sich die beiden Antennenfelder wiederum in y-Richtung.

Generell ist zu den oben beschriebenen Varianten zu sagen, dass diese Leseeinrichtungen verwendet werden können, die in einem Antennenfeld gleichzeitig mehrere Transponder lesen können. Ebenso ist es möglich, Antennenfelder zu nehmen, die nur einen Transponder gleichzeitig lesen können und die dann beim Überstreichen von zwei Transpondem gleichzeitig einen "Falschen Read" ergeben. Dieser "Falsche Read" ist jedoch auch eine verwertbare Information, so dass in diesem Fall drei unterschiedliche Zustände erreicht werden können, die zur genaueren Positionsbestimmung beitragen, bzw. die eine Fahrtrichtungserkennung ermöglichen.

Die oben beschriebenen Toleranzen spielen entsprechend eine Rolle hinsichtlich der Genauigkeit, mit der die Ware abgelegt werden kann und damit auch wieder auffindbar ist.

Durch das ständige Einlesen neuer Positionsdaten bis hin zur endgültigen Einlagerung kann eine Bewegungshistorie erzeugt werden, die die Bewegungsrichtung und Orientierung des Staplers beim Ein- und Auslagern zulässt. Ebenfalls werden hierdurch Bestimmungen von Geschwindigkeit und Beschleunigung des Fahrzeugs ermöglicht. Weiterhin lassen die Daten statistische Aussagen zu, die eine Aussage über den zurückgelegten Weg sowie Aussagen über zeitliche Abfolgenzu lassen. Beispielsweise ist eine Aussage möglich, wie lange es dauert, um einen bestimmten LKW abzuladen und die Ware an die erforderlichen Positionen zu bringen. Auch kann vorausgesagt werden, wann das Fahrzeug bzw. der Gabelstapler an einer bestimmten Lagerposition eintreffen wird. Darüber hinaus können die ständig aufgenommenen Positionsdaten dazu verwendet werden, für das Fahrzeug bzw. den Gabelstapler in Echtzeit die Fahrtrichtung zu steuern.

Obwohl, wie oben beschrieben, die Positionsbestimmungsgenauigkeit sich erhöhen lässt, indem mehrere, insbesondere sich überlappende, Antennenfelder verwendet werden und damit bessere Positionsangaben erreicht werden können, als wenn die Genauigkeit nur vom Abstand der Transponder zueinander abhängen würde, verbleibt eine Restfehlertoleranz hinsichtlich der Positionsbestimmung. Gemäß der vorliegenden Erfindung ist diese sich ergebende Toleranz jedoch absolut bestimmbar und hängt nicht vom zurückgelegten Weg des Gabelstaplers ab, wie dies der Fall ist, wenn die Position des Staplers durch Radsensoren bestimmt wird.

Um eine Ware eindeutig wiederzufinden muss die Toleranz t kleiner als die halbe Artikelgröße sein:

$$t_x = \frac{1}{2}w_x \wedge t_y < \frac{1}{2}w_y$$

wobei t für die Toleranz und w für die Abmessung der zu lagernden Waren/Palette in x-und y-Richtung steht.

Für das Auslagern einer Ware wird aus dem System die abgespeicherte Position der Ware ausgelesen. Diese Positionsangabe kann nun verwendet werden, um den Gabelstapler an die Richtige Position zu führen, entweder vollautomatisch oder durch Vorgabe von Richtungsangaben.

Generell sind vorzugsweise Einrichtungen vorgesehen, die dem System ermöglichen zu wissen, welche Ware eingelagert werden soll. Dies kann vorzugsweise dadurch geschehen, dass sich auf der Ware ein Barcode befindet, der vor dem Einlagern eingelesen wird. Möglich ist auch, dass die Ware aus einem Produktionsplanungs- und Steuerungssystem (PPS) vorbekannt ist und bei der Übergabe an den Gabelstapler diese Daten übernommen werden.

Selbstverständlich ist es jedoch auch möglich, dass ein Fahrer des Gabelstaplers die Position mitgeteilt bekommt und dann die Gabelstapler an entsprechende Stelle fährt.

Ein entscheidender Vorteil bei der vorliegenden Erfindung besteht jedoch darin, dass die gesuchte Ware mit Sicherheit an der richtigen Position steht, da das Ablegen der Ware diese Position definiert hat. Insbesondere müssen Waren damit nicht nach einem bestimmten Verteilungsschema abgelegt werden, sondern können quasi beliebig abgelegt werden und problemlos mehrmals umgeschichtet werden. Nach dem Erreichen einer neuen Position wird wiederum die Endposition dem System mitgeteilt, indem das Ablegen das Abspeichern der Endposition im Zusammenhang mit den Daten, die die Ware beschreiben bewirkt.

Das System kann auch mit Varianten kombiniert werden, in dem die Waren selbst Transponder tragen. Diese Variante ist insbesondere vorteilhaft, da hier beim Aufnehmen der Ware diese sich automatisch gegenüber dem auf dem Fahrzeug befindlichen Computer identifiziert und somit zwangsläufig richtig erfasst wird. Anschließend wird der mit dieser Ware befahrene Weg durch das ständige Überfahren von Transpondem verfolgt bzw. protokolliert. Schließlich wird die Position abgespeichert, an der diese entsprechende Ware abgelegt wird. Wie oben bereits angedeutet, kann trotz Verwendung von Transpondem an den Waren das erfindungsgemäße System vorteilhaft eingesetzt werden, da sich dadurch als kompletter Verteilungsplan der entsprechenden Waren im Lager erzeugen läßt. Ohne das erfindungsgemäße System würden sich die abgelegten Waren zwar identifizieren lassen, jedoch nur dann, wenn man sie mit einem Lesegerät unmittelbar an die entsprechende Stelle hin bewegt.

Vorzugsweise ist der auf dem Fahrzeug befindliche Computer in der Lage, entsprechende Positionsdaten über einen längeren Zeitraum zu speichern. Dies ist vorteilhaft für den Fall, dass die Funkverbindung zum Server unterbrochen ist. Alternativ erlaubt das Zwischenspeichern die Möglichkeit das kein Funksystem vorgesehen ist, sondern dass das Fahrzeug bzw. der Gabelstapler ab und zu über Kabel seine Daten an den Server überträgt. Diese Variante führt zu sehr kostengünstigen Systemen. Für die drahtlose Kommunikation zwischen Fahrzeug und Server wird vorzugsweise ein Funk-LAN vorgesehen.

Selbstverständlich können die Abstände der Transponder dort dichter sein, wo die Ware tatsächlich üblicherweise abgelegt wird. In freien Bereichen, die nur überfahren werden, können die Abstände durchaus größer sein, da hier eine aktuelle Positionserfassung weniger wichtig ist. Entscheidend ist, dass das Ablegen der Waren am Lagerplatz richtig erfasst wird.

Auch das Aufnehmen von Waren aus dem Lager wird vorzugsweise in dem System bereits durch Sensoren erfasst, so dass der Warenbestand stets richtig erfasst wird. Damit wird es möglich, nicht nur zu wissen, wo sich Waren befinden, sondern es wird gleichzeitig gewährleistet, dass der exakte Bestand der Waren abrufbar ist.

Wie erwähnt, kann aus den zusätzlichen Daten, die über die Positionserfassung ableitbar sind, wie Geschwindigkeit etc., die genaue Entladezeit für einen anliefernden LKW bzw. die Beladezeit vorausgesagt werden. Das System kann vorberechnen, dass eine bestimmte Beladung länger dauert, weil für das Auslagern der Waren weite Wege zurückgelegt werden müssen. Dies ist selbst dann möglich, wenn die aufzuladenden Waren sich an völlig unterschiedlichen Stellen im Lager befinden. Das System kann für jede einzelne Ware die Bringzeit vorberechnen.

Um die z-Koordinate für das Abheben der Ware in einem Hochlager zu erfassen, hat der Gabelstapler vorzugsweise entsprechende Sensoren, die beim Abladen der Ware erfassen, in welcher Höhe der Gabelstapler die Ware abgelegt hat. Darüber hinaus wird, wie bereits erwähnt, auch der Abstand der abgelegten Ware zum Gabelstapler erfasst, um den entsprechenden Offset bei der Positionsbestimmung richtig zu erfassen.

**Patentansprüche**

1.　System zum gabelstaplergestützten Ein- und Auslagern von Waren in einem mit Regalen versehenen Lager mit automatischer Positionierbestimmung zumindest der eingelagerten Waren, mit:

- einer Vielzahl von verteilt in den Boden des Lagers eingebrachten Transpondereinrichtungen, derart, dass zumindest der überwiegend befahrene Teil des Lagers mit derartigen Bodentranspondern bestückt ist, wobei jede Transpondereinrichtung Informationen speichert, die zumindest indirekt die Position der entsprechenden Transpondereinrichtung innerhalb des Lagers repräsentiert,
- einem Gabelstapler zum Transportieren von ein- und auszulagernden Waren,
- einer auf dem Gabelstapler angebrachten Leseeinrichtung zum automatischen Auslesen von Positionsinformationen aus den Bodentranspondem, die von dem Gabelstapler überfahren werden,
- einem Abstandssensor zum Messen des Abstandes der Einlagerposition der Ware ausgehend von der über die Bodentransponder berechneten Gabelstaplerposition, um dadurch Situationen richtig zu erfassen, bei denen die Waren in unterschiedlichen Tiefen eines Regals von dem Gabelstapler eingelagert werden,
- einer auf dem Gabelstapler angebrachten Einrichtung zur Erfassung der z-Koordinate, d.h. der Höhe der Einlagerposition der Ware innerhalb des Lagers,
- einer Computereinrichtung, die die von der Leseeinrichtung aus den Transpondern ausgelesene Information sowie die von dem Abstandssensor und der Einrichtung zur Erfassung der Höhe der Einlagerposition gelieferten Informationen empfängt und daraus die Einlagerposition der Ware innerhalb des Lagers bestimmt und speichert,

- wobei die ein- und auszulagernden Waren selbst für das System keine Transponder tragen;
- wobei die endgültige Einlagerposition ausschließlich anhand der von den überfahrenen Bodentranspondern, dem Abstandssensor sowie der Einrichtung zum Erfassen der Einlagerhöhe gelieferten Informationen bestimmt und abgespeichert wird,
- und wobei beim späteren Aufnehmen der Ware diese anhand der gespeicherten Einlagerposition angefahren, gefunden und aufgenommen wird.

2.  System nach Anspruch 1, **dadurch gekennzeichnet, dass** die Positionsbestimmung einer einzulagernden Ware während des Transports mittels des Gabelstaplers bis zur Einlagerposition entsprechend dem Überfahren unterschiedlicher Transpondereinrichtungen mehrmals vorgenommen wird.

3.  System nach Anspruch 1 oder 2, **dadurch gekennzeichnet, dass** einige der Transpondereinrichtungen keine Positionsinformation enthalten, sondern von der Leseeinrichtung beim Überfahren lediglich detektiert werden und somit eine hilfsweise Positionsbestimmung ermöglicht wird, bis zur nächsten echten Positionsbestimmung.

4.  System nach einem der vorhergehenden Ansprüche **dadurch gekennzeichnet, dass** die Computereinrichtung zumindest aus einer auf dem Gabelstapler installierten ersten Computereinrichtung, die mit der Leseeinrichtung gekoppelt ist und einer zweiten ortsfesten Computereinrichtung besteht, die über Funk mit der ersten Computereinrichtung kommuniziert.

5.  System nach Anspruch 4, **dadurch gekennzeichnet, dass** die erste Computereinrichtung ein PC ist und die zweite Computereinrichtung ein Server ist.

6.  System nach einem der vorhergehenden Ansprüche, **dadurch gekennzeichnet, dass** die Leseeinrichtung mindestens eine Antenne aufweist, die ein vorbestimmtes Antennenfeld definiert, wobei das Auslesen einer Transpondereinrichtung bei Überstreichen der Transpondereinrichtung mit dem Antennenfeld erfolgt.

7.  System nach einem der vorhergehenden Ansprüche, **dadurch gekennzeichnet, dass** die endgültige Positionsbestimmung beim Einlagern in Antwort auf ein Signal erfolgt, das vom Fahrer des Gabelstaplers gegeben wird oder durch einen Sensor gegeben wird, der das Abladen der Ware detektiert.

8.  System nach einem der vorhergehenden Ansprüche, **dadurch gekennzeichnet, dass** die Leseeinrichtung mehrere Antennen aufweist.

9.  System nach Anspruch 8, **dadurch gekennzeichnet, dass** sich die mehreren Antennenfelder zumindest teilweise überlappen.

10. System nach einem der vorhergehenden Ansprüche, **dadurch gekennzeichnet, dass** das Antennenfeld mehr als einen Transponder gleichzeitig überstreicht.

11. Verfahren zum gabelstaplergestützten Ein- und Auslagern von Waren in einem mit Regalen versehenen Lager mit automatischer Positionsbestimmung zumindest der eingelagerten Waren, enthaltend die Schritte:

- verteiltes Einbringen einer Vielzahl von Transpondereinrichtungen in den Boden des Lagers, derart, dass zumindest der überwiegend befahrene Teil des Lagers mit derartigen Bodentranspondern bestückt ist, wobei jede Transpondereinrichtung Informationen speichert, die zumindest indirekt die Position der entsprechenden Transpondereinrichtung innerhalb des Lagers repräsentieren,
- Überfahren der Transpondereinrichtungen mit einem Gabelstapler, und Auslesen von Positionsinformationen aus dem von dem Gabelstapler überfahrenen Bodentranspondern,
- Einlagern der Ware an der gewünschten Einlagerposition, wobei hierzu der Abstand der Einlagerposition zu der über die Bodentransponder berechneten Gabelstaplerposition bestimmt wird, um dadurch Situationen richtig zu erfassen, bei denen die Waren in unterschiedlichen Tiefen eines Regals vom Gabelstapler eingelagert werden,

wobei durch eine auf dem Gabelstapler angebrachte Einrichtung zur Erfassung der z-Koordinate die Höhe der Einlagerposition der Ware innerhalb des Lagers mit erfasst wird,

- Empfangen der von der Leseeinrichtung aus den Transpondern ausgelesene Information sowie der Informationen, die von dem Abstandssensor und der Einrichtung zur Erfassung der Höhe der Einlagerposition geliefert werden durch eine Computereinrichtung und Bestimmen der Einlagerpositon der Ware innerhalb des Lagers anhand dieser Informationen sowie Abspeichern der Einlagerposition,

- wobei die ein- und auszulagernden Waren selbst für das Verfahren keine Transponder tragen;

- wobei die endgültige Einlagerposition ausschließlich anhand der von den überfahrenen Bodentranspondern, dem Abstandssensor sowie der Einrichtung zum Erfassen der Einlagerhöhe gelieferten Informationen bestimmt und abgespeichert wird,

- und wobei beim späteren Aufnehmen der Ware diese anhand der gespeicherten Einlagerposition angefahren, gefunden und aufgenommen wird.

**Claims**

1. System for the fork-lift-truck-assisted storing and removal of goods in a warehouse equipped with racks, with automatic position determination of at least the stored goods, with:

   - a large number of transponder devices recessed in the floor of the warehouse in a distributed manner such that at least the most travelled part of the warehouse is equipped with such floor transponders, wherein each transponder device saves information which at least represents indirectly the position of the corresponding transponder device within the warehouse,
   - a fork-lift truck for transporting goods to be stored and removed,
   - a reading device fitted to the fork-lift truck for the automatic reading out of positional information from the floor transponders which the fork-lift truck drives over,
   - a distance sensor for measuring the spacing of the storage position of the goods item, starting from the fork-lift position calculated based on the floor transponders, in order to thereby acquire situations correctly in which the goods are stored at different depths in a rack by the fork-lift truck,
   - a device fitted to the fork-lift truck for acquisition of the z co-ordinate, i.e. the height of the storage position of the goods item within the warehouse,
   - a computer device which receives the information read out from the transponders by the reading device as well as the information provided by the distance sensor and the device for acquiring the height of the storage position and determines and saves from this the position at which the goods item is stored within the warehouse,

   wherein the goods to be stored and removed themselves do not bear any transponders for the system,
   wherein the final storage position is exclusively determined and saved based on the information provided by the floor transponders driven over, the distance sensors and the device for acquiring the storage height,
   and wherein, when the goods item is taken up later, the goods item, based on the saved storage position, is driven to, found and taken up.

2. System according to Claim 1, **characterised in that** the position determination of a goods item to be stored is carried out a number of times during transport by the fork-lift truck through to the final storage position by driving over various transponder devices.

3. System according to Claim 1 or 2, **characterised in that** some of the transponder devices contain no positional information, but rather are only detected by the reading device when driven over and thus an auxiliary position determination is facilitated until the next genuine position determination.

4. System according to one of the previous claims, **characterised in that** the computer device comprises at least one first computer device installed on the fork-lift truck, which is coupled to the reading device, and a second stationary computer device, which communicates with the first computer device by radio.

5. System according to Claim 4, **characterised in that** the first computer device is a PC and the second computer device is a server.

6. System according to one of the previous claims, **characterised in that** the reading device comprises at least one aerial, which defines a predetermined aerial array,
   wherein the reading out of a transponder device occurs by sweeping the transponder device with the aerial array.

7. System according to one of the previous claims, **characterised in that** the final position determination during storing occurs in response to a signal which is given by the driver of the fork-lift truck or is provided by a sensor which detects the deposition of the goods item.

8. System according to one of the previous claims, **characterised in that** the reading device has several aerials.

9. System according to Claim 8, **characterised in that** the many aerial arrays overlap at least partially.

10. System according to one of the previous claims, **characterised in that** the aerial array sweeps more than one transponder simultaneously.

11. Method for the fork-lift-truck-assisted storing and removal of goods in a warehouse equipped with racks with automatic position determination of at least the stored goods, comprising the steps:

- recessing of a large number of transponder devices in the floor of the warehouse in a distributed manner such that at least the most travelled part of the warehouse is equipped with such floor transponders, wherein each transponder device saves information, which at least represents indirectly the position of the corresponding transponder device within the warehouse,
- driving over the transponder devices with a fork-lift truck and reading out the positional information from the floor transponders which the fork-lift truck drives over,
- storing of the goods item at the desired storage position, wherein for this purpose the distance of the storage position to the fork-lift-truck position (calculated based on the floor transponders) is determined in order to acquire in this way situations correctly in which the goods are stored at different depths in a rack by the fork-lift truck,

wherein the height of the storage position of the goods item within the warehouse is also acquired by means of a device fitted to the fork-lift truck for acquiring the z co-ordinate,

- receiving the information read out from the transponders by the reading device as well as the information provided by the distance sensor and the device for acquiring the height of the storage position, by means of a computer device, and determining the storage position of the goods item within the warehouse based on this information and saving of the storage position,

wherein the goods to be stored and removed themselves do not bear any transponders for the method,
wherein the final storage position is determined and saved exclusively based on the information provided by the floor transponders driven over, the distance sensor as well as the device for acquiring the storage height,
and wherein, based on this saved storage position, the goods item is driven to, found and taken up in the later take-up process.

**Revendications**

1. Système de stockage et déchargement de marchandises assisté par chariot élévateur dans un entrepôt doté d'étagères, avec détermination automatique de la position d'au moins les marchandises stockées, comportant :

- une multiplicité de dispositifs transpondeurs intégrés de façon répartie dans le sol, de telle sorte qu'au moins la partie principalement parcourue de l'entrepôt soit équipée de ces transpondeurs de sol, chaque dispositif transpondeur enregistrant des informations qui représentent au moins indirectement la position du dispositif transpondeur correspondant dans l'entrepôt,
- un chariot élévateur pour transporter les marchandises à stocker et décharger,
- un dispositif de lecture aménagé sur le chariot élévateur pour lire automatiquement les informations de position des transpondeurs de sol qui sont transmises par le chariot élévateur,
- un capteur de distance pour mesurer la distance de la position de stockage des marchandises à partir de la position de chariot élévateur calculée par le biais du transpondeur de sol, pour saisir ainsi exactement les situations dans lesquelles les marchandises sont stockées dans des profondeurs différentes d'une étagère, par le chariot élévateur,
- un dispositif aménagé sur le chariot élévateur pour saisir les coordonnées z, c'est-à-dire la hauteur de la position de stockage des marchandises dans l'entrepôt,
- un dispositif informatique qui reçoit les informations lues par le dispositif de lecture à partir des transpondeurs et les informations délivrées par le capteur de distance et le dispositif de saisie de la hauteur de la position de stockage et détermine et enregistre à partir de celles-ci la position de stockage dans l'entrepôt,

- les marchandises à stocker et à décharger ne portant elles-mêmes pas de transpondeur pour le système ;
- la position de stockage définitive étant déterminée et mémorisée exclusivement sur la base des informations délivrées par les transpondeurs de sol franchis, le capteur de distance et le dispositif de saisie de la hauteur de stockage,
- et celle-ci étant approchée, trouvée et enregistrée lors de la détection ultérieure de la marchandise sur la base de la position de stockage enregistrée.

2. Système selon la revendication 1, **caractérisé en ce que** la détermination de la position d'une marchandise à stocker est réalisée à plusieurs reprises pendant le transport au moyen du chariot élévateur jusqu'à la position de stockage correspondant au franchissement des différents dispositifs transpondeurs.

3. Système selon la revendication 1 ou 2, **caractérisé en ce que** quelques-uns des dispositifs transpondeurs ne contiennent pas d'informations de position mais sont simplement détectés par le dispositif de lecture lors du passage et ainsi, permettent une détermination utile de la position, jusqu'à la prochaine réelle détermination de la position.

4. Système selon l'une des revendications précédentes, **caractérisé en ce que** le dispositif informatique est constitué au moins d'un premier dispositif informatique installé sur le chariot élévateur, qui est couplé au dispositif de lecture et d'un deuxième dispositif informatique fixe qui communique par radio avec le premier dispositif informatique.

5. Système selon la revendication 4, **caractérisé en ce que** le premier dispositif informatique est un PC et le deuxième dispositif informatique est un serveur.

6. Système selon l'une des revendications précédentes, **caractérisé en ce que** le dispositif de lecture présente au moins une antenne qui définit un champ d'antenne prédéterminé, la lecture d'un dispositif transpondeur s'effectuant par couverture du dispositif transpondeur avec le champ d'antenne.

7. Système selon l'une des revendications précédentes, **caractérisé en ce que** la détermination définitive de la position s'effectue lors du stockage en réponse à un signal qui est donné par le conducteur du chariot élévateur ou est donné par un capteur qui détecte le déchargement des marchandises.

8. Système selon l'une des revendications précédentes, **caractérisé en ce que** le dispositif de lecture présente plusieurs antennes.

9. Système selon la revendication 8, **caractérisé en ce que** les multiples champs d'antenne se recoupent au moins en partie.

10. Système selon l'une des revendications précédentes, **caractérisé en ce que** le champ d'antenne couvre plusieurs transpondeurs en même temps.

11. Procédé de stockage et déchargement de marchandises assisté par chariot élévateur dans un entrepôt doté d'étagères avec détermination automatique de la position d'au moins les marchandises stockées, comprenant les étapes :

- l'insertion répartie d'une multiplicité de dispositifs transpondeurs dans le sol d'un entrepôt de telle sorte qu'au moins la partie principalement parcourue de l'entrepôt soit équipée avec ces transpondeurs de sol, chaque dispositif transpondeur enregistrant des informations qui représentent au moins indirectement la position du dispositif de transpondeur correspondant dans l'entrepôt,
- le passage sur les dispositifs de transpondeur à l'aide d'un chariot élévateur et la lecture des informations de position provenant des transpondeurs de sol sur lesquels passe le chariot élévateur,
- le stockage des marchandises dans la position de stockage souhaitée, l'intervalle de la position de stockage à la position du chariot élévateur calculée par les transpondeurs de sol étant déterminé à cette fin, pour que les situations dans lesquelles les marchandises sont stockées à différentes profondeurs d'une étagère soient saisies de façon exacte par le chariot élévateur,
la hauteur de la position de stockage des marchandises étant saisie également dans l'entrepôt par un dispositif disposé sur le chariot élévateur pour saisir les coordonnées z,
- la réception des informations lues par le dispositif de lecture des transpondeurs et des informations qui sont délivrées par le capteur de distance et le dispositif de saisie de la hauteur de la position de stockage, par un dispositif informatique et la détermination de la position de stockage de la marchandise dans l'entrepôt sur la base de ces informations, ainsi que la mémorisation de la position de stockage,
- les marchandises à stocker et décharger ne portant pas elles-mêmes de transpondeur pour le procédé ;
- la position de stockage définitive étant déterminée et enregistrée exclusivement sur la base des informations délivrées par les transpondeurs de sol franchis, le capteur de distance et le dispositif de saisie de la hauteur de stockage,
- et lors du captage ultérieur des marchandises, celle-ci étant atteinte, trouvée et enregistrée sur la base de la position de stockage enregistrée.

Fig. 1

Fig.2

Fig. 3

Fig. 4 a.)

Fig. 4 b.)

Fig. 4 c.)

Fig. 4 d.)

Fig. 4 e.)

Fig. 4 f.)

Fig. 4 g.)

Fig. 4 h.)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938345 C1
- WO 0106401 A
- US 5260694 A

**In der Beschreibung aufgeführte Nicht-Patentliteratur**

- RFID Speeds P & G Plant Throughput. *RFID Journal,* 03. Februar 2003